(19)

Europäisches
Patentamt

European
Patent Office

Office européen
des brevets

(11) **EP 2 236 823 A1**

(12) **EUROPEAN PATENT APPLICATION**
published in accordance with Art. 153(4) EPC

(43) Date of publication:
06.10.2010 Bulletin 2010/40

(21) Application number: 08849158.4

(22) Date of filing: 10.11.2008

(51) Int Cl.:
*F03D 11/02* (2006.01)    *F16H 1/46* (2006.01)
*F16H 57/02* (2006.01)

(86) International application number:
**PCT/ES2008/070203**

(87) International publication number:
**WO 2009/063119 (22.05.2009 Gazette 2009/21)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **16.11.2007 ES 200703032**

(71) Applicant: **Gamesa Innovation & Technology, S.L. Avenida Ciudad de la Innovación 9-11 31621 Sarriguren (ES)**

(72) Inventor: **FERNANDEZ GARCIA, Angel 48170 Zamudio (ES)**

(54) **POWER TRANSMISSION WITH HIGH GEAR RATIO, INTENDED FOR A WIND TURBINE**

(57) Large numerical ratio transmission for a wind turbine which provides a balanced design with a simple construction and a low number of components.

FIG. 3

EP 2 236 823 A1

## Description

### Field of the invention

The main objective of this invention is to provide a mechanical power transmission system that can achieve high numerical transmission ratios, with few steps, simpler construction, lower number of components and lower cost than current transmissions

### Background

This is important in the wind turbine industry in which larger machines are being designed for the future with the corresponding increase of weight and cost of the transmission. In large wind turbines typically high numerical ratio transmissions are needed to achieve the high rotational speeds required by standard design generators. This is due to the fact that the blades-rotor rotational speed is inversely proportional to the rotor diameter. For very large wind turbines the required transmission ratios to drive standard, lower cost and weight generators, is in the order of 100 to 200 to one.
Current transmission designs require several ratio steps. This results in large, heavy, complicated and expensive machines with large number of components. Statistically, this reduces the overall reliability of the machine. Additionally, in order to achieve large numerical ratios with few steps, current transmission designs require that some of the gears, such as sun gears in planetary sets, or wheels in parallel shafts, are of relatively small diameter with few teeth, low contact ratios and large number of high load cycles. This is markedly evident in sun gears in the highly loaded first planetary stage in which the teeth in such gears have high number of load cycles, due to the relatively low number of teeth and, and the reverse nature of the cycles in tooth bending. The results are designs which are sensitive to these critical gear components which have to be dimensioned large enough to last, thereby resulting in the other components and the transmission itself being too large and heavy.
An example of these cases is the publication EP1046838 which shows a several planetary stages gearbox for wind turbines which input and output shafts are at different heights.
Another similar example is the application DE10318945 which shows a gearbox for wind turbines with a planetary set that move in the inner side of a fixed housing.
FR1601670 also shows a gearbox with input and output shafts at different heights.
US2004247437 shows a gearbox and generator set for domestic use.
As it will be appreciated, this invention avoids the shortcomings described above, providing for balanced designs with low number of components of inherent strength and no critical components.

### Brief Summary Of The Invention

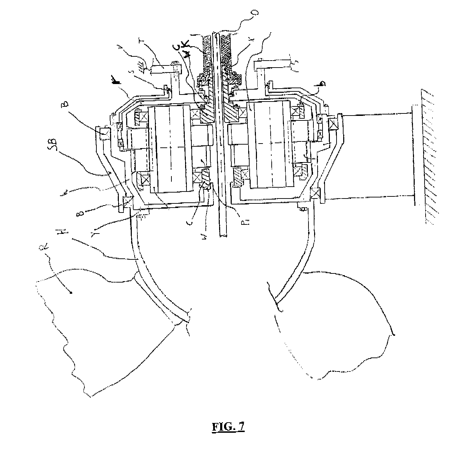

In a non direct drive wind turbine, the main shaft driven by the rotor transmits power to the input shaft of a gearbox, the output shaft of which transmits this power to a load such as a generator. This gearbox consists of a stationary housing with internal gears, which increase the rotational speed of the rotor so that standard design generators can be connected to the output shaft of said transmission. Usually these transmissions require several gear stages in order to achieve the large speed ratios required.
As it will be realized in the present invention, the low number of gearbox stages and components, and simple construction, results in a more effective means for increasing the slow rotational speed of the blades and rotor assembly to the rotational speed required to drive standard generators. Additionally, having the input rotation transmitted through a ring gear, allows for having said ring gear carried by the transmission housing itself which rotates and it may comprise the main shaft, or even the hub itself. This may represent a substantial savings in number of components, weight and cost. This is best shown in Figure 7.

### Brief Description Of The Drawings

Figures 1 and 2 are the mathematical equations and schematic representations of the concept this invention is based upon.

Figures 3, 4, 5, 6, and 7 are sketches representing longitudinal sections of the different embodiments this invention could take in a wind turbine.

**Detailed Description Of The Invention**

The theory of operation of the invention is explained in the following paragraphs.

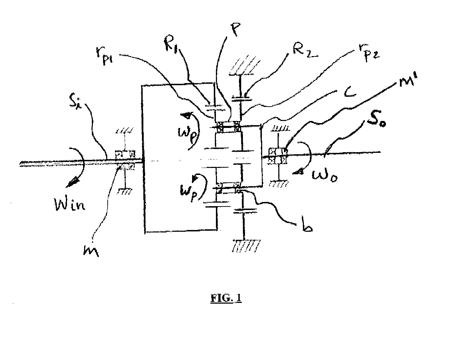

Referring to Figure 1, the input shaft of the transmission "Si" is connected to the main shaft of a turbine rotor. Shaft "Si" is rotatably affixed to ring gear "R1" and is supported by bearings "m".

Ring gear "R1" meshes with a plurality of planet gears "rp1". Each one of said planet gears "rp1" is rotatably affixed to another planet gear "rp2" and is substantially concentric with it, so as to form one assembly "p" of two planet gears. Said plurality of planet gear assemblies "p" are supported by bearings "b" in a planet carrier "c" which extends to the output shaft "So" which being supported by bearings "m' " rotates substantially concentric with input shaft "Si".

Said plurality of planet gears "rp2" mesh with ring gear "R2" which is fixed to a stationary framework.

According to the equations

$$[1] \ Win \ R1 = Wo \ R1 - Wp \ rp1$$

$$[2] \ Wo \ R2 - Wp \ rp2 = 0$$

$$[3] \ Wo = Win \ \frac{R1 \ / \ rp1}{(R1 \ / \ rp1) - (R2 \ / \ rp2)} \qquad \begin{array}{l} \text{being } R1 \ / \ rp1 = K1 \\[4pt] \text{being } R2 \ / \ rp2 = K2 \end{array}$$

$$[4] \ Wo = Win \ \frac{K1}{K1 - k2} \qquad \text{being } K2 \ / \ K1 = K$$

$$[5] \ Wo \ / \ Win = 1 \ / \ (1 - K) \qquad \text{for } K < 1$$

the angular speeds of the input shaft and the output shaft are represented by "Win" and "Wo" respectively. The angular speed of the planet assemblies "p" relative to the planet carrier "c" is represented by "Wp".

Mathematical expression [1] equates the absolute speed of the mesh point of ring gear "R1" related to that of the mesh point in planet "rp1". Mathematical expression [2] equates the absolute speed of the mesh point of ring gear "R2" related to that of the mesh point in planet gear "rp2". The pitch radius of ring gear R1 is represented in the mathematical expressions by "R1", and likewise for the pitch radii of planets "rp1" and "rp2" and for ring gear R2. Both equations take into consideration the directions of rotation shown in Figure 1. Constants K1 and K2 represent the relative ratios of the pitch radii of each ring gear related to the planet gear which it is in mesh with.

Eliminating "Wp" between equations [1] and [2] yields expression [4] and simplifying we obtain [5] which is the equation of the transmission ratio in which "K" is always smaller than one for machines in which the input and output rotational speeds are in the same direction, as shown in the Figures, and "K" is always larger than one for machines that reverse rotation. In the latter case the pitch radii "rp1" and R1 are larger than the respective "rp2" and R2, contrary to what is shown in Figure 1. In any case, it can be appreciated that by designing gears sets in which K1 and K2 have close numerical values, that is, the value of "K" is close to one, then, high numerical values of transmission ratio can be achieved. It is of interest to point out that the overall ratio is not a function of the size of the planet gears but of the ratio of their pitch diameters.

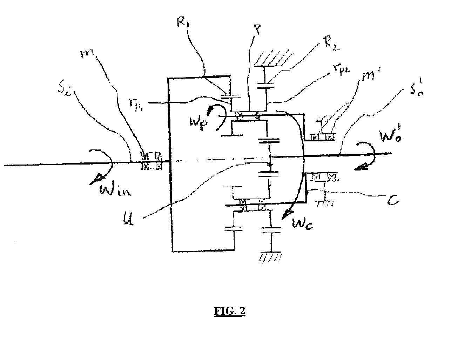

In a logical expansion of this concept, in a second embodiment of the invention, referring to Figure 2, the planet carrier is no longer connected to the output shaft, but is supported for free rotation in bearings "m'''". A sun gear "u" engages in meshing connection the plurality of planet gears "rp2" as shown. Said sun gear extends to the output shaft "So" which rotates at the output speed "Wo'''". The rotational speed of the planet carrier is now represented by "Wc" instead of "Wo" as in the first embodiment. Mathematical expression

$$[6] \ Wc \ / \ Win = 1 \ / \ (1 - K)$$

represents the value of said rotational speed "Wc", which is obtained by replacing "Wo" by "Wc" in equation [5] of the first embodiment in Figure 1.
$$\text{Equation} \\ [7] \quad Wp = Wc\ (R2\ /\ rp2) = Wc\ K2$$

gives the value "Wp" of the relative rotational speed of the planet assembly "p" to the planet carrier "c" and is obtained by replacing "Wo" by "Wc" in equation [2] of the first embodiment.

$$[8] \quad Wc\ ru + Wp\ rp2 = Wo'\ ru$$

where calculating and simplifying Wo' = Wc (1 + (R2 / ru)) entering the value of "Wc" from [6]

Mathematical expression [8] equates the absolute mesh point speed of sun gear (u) related to that of the corresponding mesh point in planet gear (rp2), the value of the pitch radius of sun gear (u) being represented by (ru). Calculating and simplifying

$$Wo' = Wc\ (1 + (R2\ /\ ru)) \quad \text{entering the value of "Wc" from [6]}$$

equation is obtained

$$[9] \quad Wo' = Win\ \frac{(1 + (R2\ /\ ru))}{1 - k}$$

in which a higher speed ratio is obtained compared to that of previous equation [5]. As an example, assuming a practical value of the ratio "R2/ru" of 4, the speed ratio would be 5 times larger than that obtained with the first embodiment.

Nevertheless, overall speed ratios in the range of 100 to 200 to one are therefore attainable with gears of practical sizes and pitch diameter ratios.

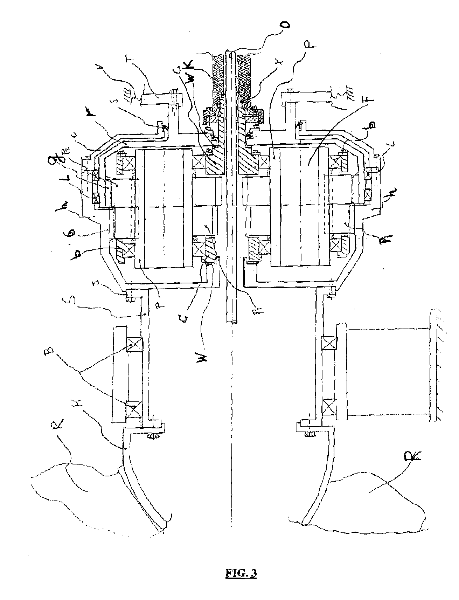

Referring to Figure 3, in a first embodiment of this invention, a driveline of a wind turbine is schematically represented. A rotor assembly "R" is connected to a hub "H" which in turn is connected to a main shaft "S" which is free to rotate on bearings "B".

The transmission housing "h" is rigidly connected to said main shaft through joint "J", and therefore rotates with said main shaft. A bolted connection is shown, only as an example, other means of connection being possible such as shrink collar, and others. A first ring gear "G" is affixed to said housing, with its pitch circle concentric with the axis of rotation of said housing and main shaft assembly and it is provided with internal teeth. A plurality of planet gears assemblies "P", preferably 3 or more, are in meshing engagement with said ring gear and are preferably disposed equally spaced circumferentially around said ring gear. Planet assemblies "P" are free to rotate about their own longitudinal axis and are supported by bearings "b". Said bearings can be mounted, as an example, housed in carrier "C" with other mounting arrangements being possible to provide different amounts of flexibility in the position of said planet gears assemblies in order to achieve the desired contact load distribution at the gears meshing contacts points. Each planet gears assembly "P" consist of planet gears "p1" and "p2" which are rigidly attached to a common planet shaft "F", with planet gears "p1" being in meshing engagement with ring gear "G", through straight or helical gear teeth. A second ring gear "g" with internal gear teeth is in meshing engagement with planets "p2" through straight or helical teeth. The pitch circle of said internal teeth is held concentric with the axis of rotation of housing "h" by bearings "L", which also provide axial position control and load support. Helix angles of planet gears "p1" and "p2" teeth are preferably both either right or left hand and with different angle values such that the axial components of gear forces exerted by ring gears "G" and "g" are compensated, cancelling each other under steady state operation of the wind turbine. When wind turbine speed changes occur, inertial forces due to the acceleration of planet assemblies "P", generate additional tooth forces which cannot be cancelled by said compensating helix angles. These relatively small non compensated axial forces are transmitted through planet gearings "b" and through planet carrier "C" to output shaft bearings "W" or "w". A concentric hole "O", running the entire length of the planet carrier "C", may be provided to allow for piping or wiring to provide hydraulic or electrical power to the hub "H" and rotor "R". Planet carrier "C" is a floating type with its weight being supported by the gear teeth mesh forces between planets, "p1" and "p2", and ring gears "G" and "g", which they engage.

Ring gear "g" extends to circular section "r" and structural torque reaction members "T" which provide for a stationary reaction point required in any gearbox. This is shown as one continuous piece in the Figures as an example only. Other constructions, such as independent components "g", "r" and "T" rigidly connected to each other, being possible. Examples of said connections can be bolted, splined, pinned or welded joints, but are not limited to these. Rear cover "c" is provided for closure of the transmission and a stationary seal "s" provides lubricant leak proof closure.

Output shaft "K" maybe integral with planet carrier "C" or may be a separate piece connected to planet carrier "C" for rotation by connection "X", examples of which can be a splined or articulated connection.

Compliant and resilient members "V" may be provided for damping of loads and noise.

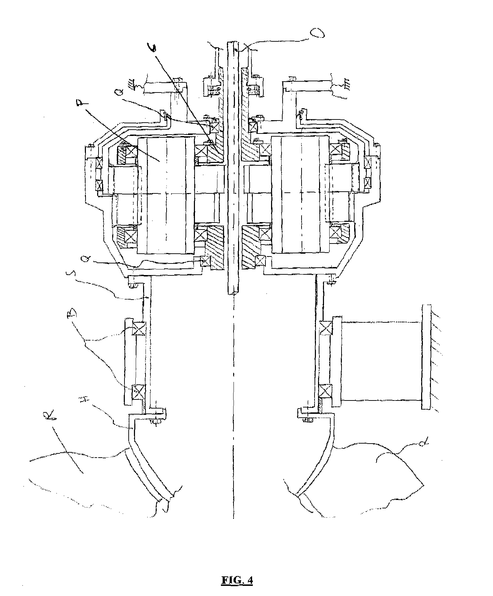

Referring to Figure 4, in a second embodiment of this invention, bearings "Q" are provided for location control of planet carrier "C". Planet carrier "C" is not a floating type, and in the preferred construction will comprise equally angularly spaced planet assemblies "P". Bearings "Q" main load is the weight of said carrier assembly when planet and ring gears teeth are straight. In case of helical teeth with compensating helix angles, as explained before, additional relatively small axial loads are supported by bearings "Q" only under non steady state operation. Said axial loads are generated by inertial forces required to accelerate the rotating mass of planet assemblies "P" when rotational speed changes of the wind turbine occur.

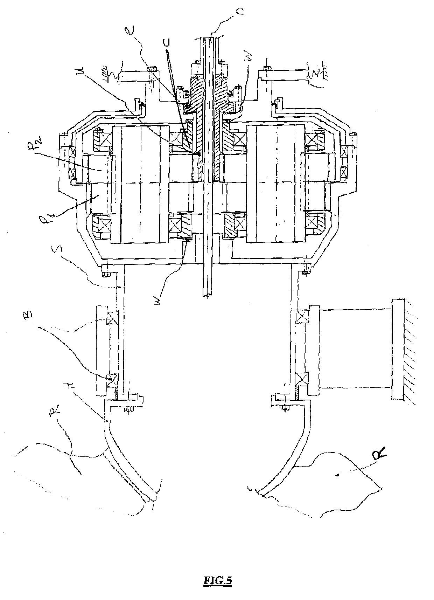

Referring to Figure 5 in a third embodiment of this invention, a sun gear "U" is in meshing engagement with planets "p2" and it is connected for driving engagement to the output shaft "W". As explained before, this configuration, with output through the sun gear "U", provides a gearbox multiplication ratio several times higher than those of embodiments first and second as shown in Figures 3 and 4. Bearings "e" provide for location control of said output shaft. Overall multiplication ratios of 100 to 200 to one are easily achievable in practice. The teeth of planet gears and sun gear can be straight or helical. Planet carrier "C" is a floating design type which in the case of helical teeth, said compensated helix angles values in planet gears "p1" and "p2" are such that the relatively small value of the thrust generated by the sun gear helical teeth acting on the planet carrier is taken into account and the resultant thrust on the carrier is zero. The value of said planet helix angles, therefore, differs slightly from of those chosen in the first and second embodiments, which had the output directly from the planet carrier. As explained in the first and second embodiments, the additional axial forces generated by inertial forces of planet gears "p1" and "p2" when wind turbine speed changes occur, are not cancelled in planet assemblies "P" helical teeth, may be transmitted through sun gear "U" helical teeth to output shaft bearings "e" and through planet carrier thrust bearings "W".

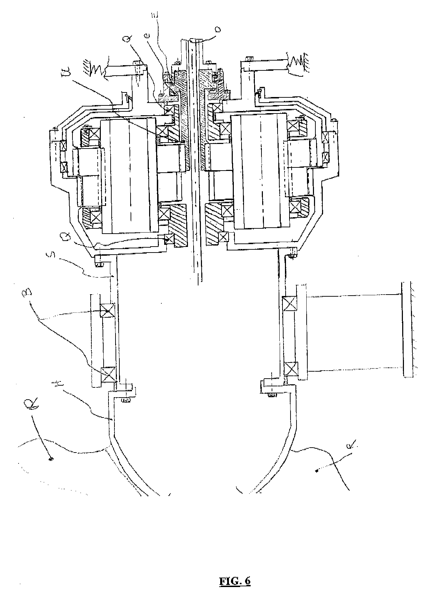

Figure 6 represents the same embodiment of Figure 5 except for the addition of bearings "Q" for position control of planet carrier assembly "C". Additionally, bearings "e" and "E" may be provided in addition to bearings "Q".

Referring to Figure 7, in a further simplified embodiment of this invention, the main shaft has been eliminated, and the transmission housing is rigidly connected directly to the hub. A bolted connection "Y" is an example of this connection. Housing "h" being preferably substantially cylindrical, and with the outside surface having machined cylindrical seats at a plurality of places and at least one, but preferably at two places, as shown, accommodating two large bearings "B" which support the radial and axial loads of the rotor assembly "R" and the transmission weight Effectively the transmission housing replaces the main shaft which is eliminated. The planet carrier shown is a floating type with output through the planet carrier, similar to that in the first embodiment.

Likewise, the mentioned embodiments non floating planet carrier, output through planet carrier, floating planet carrier output through sun gear and non floating planet carrier output through sun gear respectively can be respectively constructed in a similar way.

It is to be understood that this disclosure is merely illustrative of the preferred embodiments of this invention, and that no limitations are intended, or implied, in size, shape, proportions, geometry or design

## Claims

1. Large numerical ratio transmission for a wind turbine comprising a tower upon which a nacelle is mounted, an assembly of rotor blades that makes up a hub, and a gearbox which moves a load, as for example a generator, **characterized** because it comprises;

   a rotating gearbox housing rigidly connected to a main shaft or to a hub; a rear cover at the output side with a concentric circular opening, rigidly affixed to the rotating housing;

   a first teethed gear ring internally and rigidly affixed to said housing and substantially concentric with the axis of rotation;

   a second teethed gear ring located internally which extends beyond the outer side of the rear cover of the gearbox through a circular opening, and which ends in a plurality of radial arms, where at least one of them is permanently connected to the nacelle of the wind turbine;

   one or more bearings which maintain permanently the radial and axial position of the second teethed gear ring substantially concentric with the rotation shaft, and supporting the loads of said second gear ring;

   some sealing means between the circular opening of the rear cover and the second teethed gear ring which avoid the spilling of a lubricant liquid towards the outside of the gearbox;

one or several double planetary assemblies, which comprise a first and a second planetary gear joined each other by a common shaft, said first planetary gear in meshing engagement with the first teethed gear ring, and said second planetary gear in meshing engagement with said second teethed gear ring;

a planet carrier which contains and supports said plurality of double planetary assemblies;

a plurality of bearings for load support of said double planetary assemblies housed in said planet carrier;

one or several bearings which maintain permanently the radial and axial position of the planet carrier substantially concentric with the rotation shaft;

an output shaft concentrically placed which extends beyond the rear cover of the gearbox through a concentric opening in the second teethed gear ring, which transmits the rotation to the load;

one or several bearings for load support and for the control of the position of the output shaft;

and sealing means which provide a permanent closure between the output shaft and the extension of the second teethed gear ring.

2. Large numerical ratio transmission for a wind turbine, according to claim 1, **characterized** because the output shaft is rigidly joined to the planet carrier.

3. Large numerical ratio transmission for a wind turbine, according to claim 1, **characterized** because alternatively the output shaft comprises a teethed ring in meshing engagement with the second planetary gear.

4. Large numerical ratio transmission for a wind turbine, according to claim 1, **characterized** because the planet carrier is supported over the bearings located in the rotating housing and in the inner side of the second teethed gear ring.

5. Large numerical ratio transmission for a wind turbine, according to claim 1, **characterized** because alternatively comprises a floating planet carrier without bearings.

6. Large numerical ratio transmission for a wind turbine, according to claim 1, **characterized** because the rotating housing is rigidly joined to the main shaft.

7. Large numerical ratio transmission for a wind turbine, according to claim 1, **characterized** because alternatively the rotating housing is rigidly connected to the hub.

**FIG. 1**

**FIG. 2**

**FIG. 3**

**FIG. 4**

**FIG.5**

**FIG. 6**

**FIG. 7**

# INTERNATIONAL SEARCH REPORT

| International application No. |
|---|
| PCT/ ES 2008/070203 |

**A. CLASSIFICATION OF SUBJECT MATTER**

see extra sheet

According to International Patent Classification (IPC) or to both national classification and IPC

**B. FIELDS SEARCHED**

Minimum documentation searched (classification system followed by classification symbols)

F03D, F16H

Documentation searched other than minimum documentation to the extent that such documents are included in the fields searched

Electronic data base consulted during the international search (name of data base and, where practicable, search terms used)

INVENES, EPODOC

**C. DOCUMENTS CONSIDERED TO BE  RELEVANT**

| Category* | Citation of document, with indication, where appropriate, of the relevant passages | Relevant to  claim No. |
|---|---|---|
| Y | DE 3529404 A (R. ECKERT) 26.02.1987<br>Abstract; figure | 1- 7 |
| Y | GB 2175668 A (N. WIRTH) 03.12.1986<br>Pág.1, lín.5 - pág.2, lín.11; pág.2, lín.21-24;<br>figure | 1-7 |
| A | US 3081648 A (M. DUER) 19.03.1963<br>Col.2, lín.41- col.3, lín.52; figures | 1,3,5 |
| A | US 2402756 A (F. LAWLER) 25.06.1946<br>Col.1, lín.48- col.2, lín.54; fig.1-2 | 1,2,4 |
| A | WO 01/48395 A (J. TROMELIN) 05.07.2001<br>Abstract; figures 1,2 | 1 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
|---|---|
| 26.February.2009          (26.02.2009) | **(27/02/2009)** |
| Name and mailing address of the ISA/<br>O.E.P.M.<br><br>Paseo de la Castellana, 75 28071 Madrid, España.<br>Facsimile No.   34 91 3495304 | Authorized officer<br>S. Gómez Fernández<br><br>Telephone No. +34 91 349 53 76 |

Form PCT/ISA/210 (second sheet) (July 2008)

## INTERNATIONAL SEARCH REPORT

Information on patent family members

International application No.

PCT/ ES 2008/070203

| Patent document cited in the search report | Publication date | Patent family member(s) | Publication date |
|---|---|---|---|
| DE 3529404 A | 26.02.1987 | None | ------------ |
| GB 2175668 A | 03.12.1986 | None | -------------- |
| US 3081648 A | 19.03.1963 | US 3104962 A | 24.09.1963 |
| US 2402756 A | 25.06.1946 | None | ------------ |
| WO 01/48395 A | 05.07.2001 | AU 2857501 A<br>FR 2804727 AB<br>FR 2804726 A<br>EP 1254325 A | 09.07.2001<br>10.08.2001<br>10.08.2001<br>06.11.2002 |

Form PCT/ISA/210 (patent family annex) (July 2008)

## INTERNATIONAL SEARCH REPORT

International application No.

PCT/ ES 2008/070203

CLASSIFICATION OF SUBJECT MATTER

*F03D 11/02* (2006.01)
*F16H 1/46* (2006.01)
*F16H 57/02* (2006.01)

Form PCT/ISA/210 (extra sheeet) (July 2008)

**EP 2 236 823 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1046838 A
- DE 10318945
- FR 1601670
- US 2004247437 A